# EUROPÄISCHE PATENTSCHRIFT

(11) **EP 1 069 036 B1**
(45) Veröffentlichungstag und Bekanntmachung des Hinweises auf die Patenterteilung: **03.03.2004**
(21) Anmeldenummer: 00112127.6
(22) Anmeldetag: 06.06.2000
(51) Int. Cl.: B62K 15/00

(54) **Klappbares Zweirad, insbesondere Fahrrad**
Foldable two-wheel vehicle, in particular bicycle
Véhicule pliable à deux roues, notamment bicyclette

(30) Priorität: 10.07.1999 DE 19932282
(43) Veröffentlichungstag der Anmeldung: 17.01.2001
(73) Patentinhaber: Bayerische Motoren Werke Aktiengesellschaft, 80809 München (DE)
(72) Erfinder: Wagner, Bernhard, 80637 München (DE); Schlitt, Peter, 63128 Dietzenbach (DE); Hafner, Klaus, 63128 Dietzenbach (DE)

(56) Entgegenhaltungen:
- WO-A-00/05128
- DE-A- 3 701 803
- DE-A- 4 313 832
- DE-A- 4 400 500
- DE-A- 19 620 457

## Beschreibung

Die Erfindung betrifft ein klappbares Zweirad, insbesondere ein Fahrrad, gemäß dem Oberbegriff des Patentanspruches 1.

Ein derartiges Zweirad ist aus der WO 00/05128 bekannt.

Aus der DE 37 01 803 A1 ist ein Fahrrad mit einem faltbaren Rahmen bekannt, an dem über eine Schwinge das Hinterrad befestigt ist, wobei die Schwinge für das Hinterrad am Tretlager mit einem Schwenklager befestigt ist, dessen Schwenkachse mit der Achse der Tretlagerwelle zusammenfällt.

Das Patent FR 528 992 beschreibt ein solches Fahrrad, bei dem der Rahmen aus einem vorderen Rahmenteil und einem damit verbundenen hinteren Rahmenteil besteht, wobei die Verbindung zwischen vorderem und hinterem Rahmenteil aus einem um eine Querachse des Zweirads schwenkbaren Drehgelenk und einer Abstützeinrichtung besteht. Durch das Drehgelenk ist das vordere Rahmenteil mit dem hinteren Rahmenteil um die Querachse schwenkbar verbunden. Die Abstützeinrichtung ist in der Art eines Federbeins ausgebildet, das die beiden Rahmenteile federnd und stoßdämpfend verbindet.

Dieses Fahrrad ist weder durch Zuammenklappen auf ein genügend reduziertes Packmaß zu verkleinern, noch ist die Hinterradfederung als ideal anzusehen. Antriebseinflüsse durch kraftvolles Antreten führen zu starkem Wippen.

Deshalb ist es Aufgabe der Erfindung, ein Zweirad, insbesondere ein Fahrrad, mit gefedertem Hinterrad bereitzustellen, das zusammengeklappt viel weniger Raum einnimmt als im aufgebauten Zustand. Des weiteren soll der Rahmen so gestaltet sein, daß auch bei sportlicher Fahrweise der Antrieb über die Federung möglichst wenig Einfluß auf die Fahreigenschaften hat.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besitzt der hintere Rahmenteil eine lösbare Verbindung, die diesen für Fahrbetrieb geschlossen hält und die zum Zusammenklappen des Zweirads geöffnet wird und die den hinteren Rahmenteil in einen feststehenden und einen schwenkbaren Abschnitt teilt, wobei der schwenkbare Abschnitt um ein weiteres Drehgelenk im hinteren Rahmenteil, um eine weitere Querachse des Zweirads, verschwenkt werden kann, während die Abstützeinrichtung zwischen dem feststehenden Abschnitt und dem vorderen Rahmenteil verbleibt.

Das weitere Drehgelenk im hinteren Rahmenteil wird dazu benutzt, den schwenkbaren Abschnitt des hinteren Rahmenteils bei gelöster Verbindung so zum vorderen Rahmenteil und zum feststehenden Abschnitt des hinteren Rahmenteils zu verschwenken, daß das Zweirad sehr wenig Raum beansprucht. Es wird durch das weitere Drehgelenk ein optimales Packmaß erreicht. Dabei verbleibt die Abstützeinrichtung fest zwischen dem vorderen Rahmenteil und dem feststehenden Abschnitt des hinteren Rahmenteils. Dies erleichtert die Handhabung beim Zusammenklappen und vermeidet zum Beispiel den Nachteil eines losen Federbeins im zusammengeklappten Zustand. Das Hinterrad kann vorteilhafterweise im schwenkbaren hinteren Rahmenteil montiert verbleiben, während das Vorderrad aus der Vorderradaufhängung entfernt werden muß. Die Position des Drehgelenks kann unabhängig vom Klappmechanismus in die des idealen Schwingendrehpunkts gelegt werden, etwa in Höhe der Kettenauflage auf der Oberkante des Antriebskettenblatts.

In einer vorteilhaften Ausführung der Erfindung befindet sich das Drehgelenk der Verbindung zwischen vorderem und hinterem Rahmenteil auf einer Horizontalebene, die oberhalb einer Lagerstelle für ein Tretlager liegt und das weitere Drehgelenk befindet sich im hinteren Rahmenteil auf einer Horizontalebene, die unterhalb der Lagerstelle für das Tretlager liegt. Dabei kann das hintere Rahmenteil vorteilhafterweise zwischen Drehgelenk und weiterem Drehgelenk um die Lagerstelle für das Tretlager herum gekröpft ausgeführt werden.

Weitere bevorzugte Ausführungen der Erfindung sind dadurch gekennzeichnet, daß das hintere Rahmenteil im wesentlichen die Form eines Dreiecks besitzt, an dessen erster Ecke das Hinterrad angebracht ist, an dessen zweiter Ecke die teilbare Verbindung liegt und die Abstützeinrichtung angebracht ist und an dessen dritter Ecke sich das weitere Drehgelenk befindet. Dabei kann sich das Drehgelenk der Verbindung zwischen vorderem und hinterem Rahmenteil zwischen der zweiten und der dritten Ecke befinden. Dadurch wird vorteilhafterweise die sogenannte Cantileverbauweise für ein klappbares Zweirad ohne nachteilige Einflüsse zwischen Antrieb und Federung verwirklicht.

Weitere bevorzugte Ausführungen der Erfindung sind dadurch gekennzeichnet, daß am vorderen Rahmenteil ein Vorderrad durch eine Vorderradaufhängung federnd und/oder dämpfend abgestützt wird, indem ein Längslenker am vorderen Rahmenteil um eine weitere Querachse des Zweirads schwenkbar angebracht ist, der eine federnde und/oder dämpfende Abstützung der Vorderradaufhängung bildet, während durch eine Verbindung über mindestens ein Kugelgelenk zwischen dem vorderen Rahmenteil und der Vorderradaufhängung eine weitere Abstützung der Vorderradaufhängung am vorderen Rahmenteil gebildet wird. Dabei können Vorderrad mit Vorderradaufhängung und/oder Hinterrad mit hinterem Rahmenteil und/oder feststehender mit schwenkbarem Abschnitt des hinteren Rahmenteils durch ohne Werkzeug lösbare Verbindungen, insbesondere durch Schneilspannverschlüsse, verbunden sein. Solche Verbindungen sind kostengünstig und leicht lösbar. Sie sind von Hand lösbar und vorteilhafterweise sicher und einfach ausgebildet.

Ein bevorzugtes Ausführungsbeispiel der Erfindung ist in der nachfolgenden Beschreibung mit der zugehörigen Zeichnung dargestellt. Es zeigen
- Fig. 1: ein Zweirad gemäß der Erfindung, mit den für die Klappbarkeit wesentlichen Teilen, in fahrfertigem Zustand, in Seitenansicht, gezeichnet in einem Koordinatennetz und
- Fig.2: das Zweirad aus Fig. 1 zusammengeklappt, mit entferntem Vorderrad, ebenfalls in Seitenansicht und in einem Koordinatennetz gezeichnet.

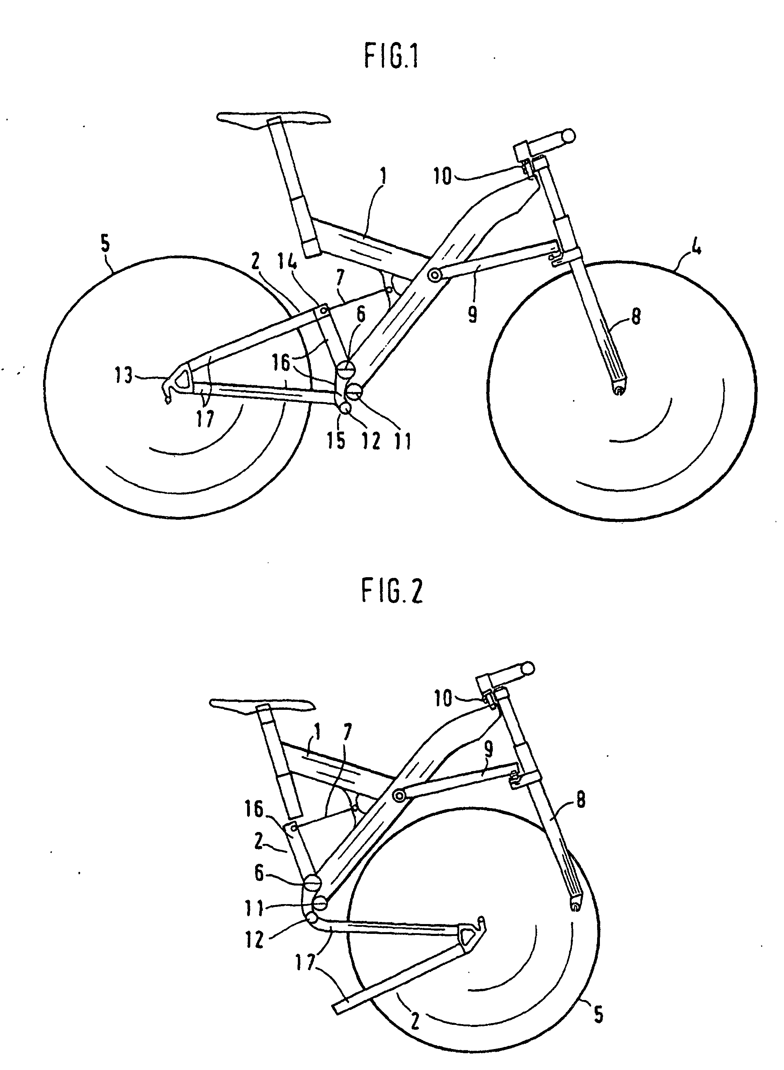

Nach Fig. 1 besteht ein auf geringen Stauraum zusammenklappbares Zweirad im wesentlichen aus einem vorderen Rahmenteil 1, einem hinteren Rahmenteil 2, einer Vorderradaufhängung mit Vorderrad 4 und aus einem Hinterrad 5. Das vordere Rahmenteil 1 ist über ein Drehgelenk 6 mit dem hinteren Rahmenteil 2 verbunden, so daß beide Rahmenteile 1, 2 um die Achse des Drehgelenks 6, eine Querachse des Zweirads, gegeneinander verschwenkt werden können.

Im Fahrbetrieb wird das Zusammenklappen der beiden Rahmenteile 1, 2 dadurch verhindert, daß sie durch eine Abstützeinrichtung miteinander verbunden sind. Diese Abstützeinrichtung kann ein Feder- und/oder Dämpferelement 7 sein, hier nur durch eine gerade Linie angedeutet gezeichnet, das die beiden Rahmenteile 1, 2 elastisch gegeneinander abstützt.

Das Feder- und/oder Dämpferelement 7 ist, in Fahrtrichtung gesehen, an seinem nach hinten weisenden Ende mit dem hinteren Rahmenteil 2 und an seinem nach vome weisenden Ende mit dem vorderen Rahmenteil 1 verbunden.

Ebenfalls kann die Vorderradaufhängung federnd und/oder dämpfend ausgebildet sein, z. B. indem das Vorderrad 4 in einer Vorderradgabel 8 aufgenommen ist, die durch einen Längslenker 9 und ein Kugelgelenk 10 mit dem vorderen Rahmenteil 1 verbunden ist. Dabei ist der Längslenker 9 um eine weitere Querachse des Zweirads schwenkbar am vorderen Rahmenteil 1 angebracht und stützt sich durch ein weiteres, nicht gezeichnetes Feder- und/oder Dämpferelement am vorderen Rahmenteil 1 ab.

Das Drehgelenk 6 der Verbindung zwischen vorderem und hinterem Rahmenteil 1,2 befindet sich auf einer Horizontalebene, die oberhalb einer Lagerstelle 11 für ein Tretlager liegt und ein weiteres Drehgelenk 12 befindet sich im hinteren Rahmenteil 2 auf einer Horizontalebene, die unterhalb der Lagerstelle 11 für das Tretlager liegt. Dabei ist das hintere Rahmenteil 2 zwischen Drehgelenk 6 und weiterem Drehgelenk 12 um die Lagerstelle 11 für das Tretlager herum gekröpft ausgeführt.

Der hintere Rahmenteil 2 besitzt bei dem für Fahrbetrieb aufgebauten Zweirad in Figur 1 im wesentlichen die Form eines Dreiecks, an dessen erster Ecke 13 das Hinterrad 5 angebracht ist, an dessen zweiter Ecke 14 eine lösbare Verbindung zum Teilen des hinteren Rahmenteils 2 liegt und das Feder- und/oder Dämpferelement 7 angebracht ist und an dessen dritter Ecke 15 sich das weitere Drehgelenk 12 befindet. Dabei liegt das Drehgelenk 6 der Verbindung zwischen vorderem und hinterem Rahmenteil 1,2, in vertikaler Richtung gesehen, zwischen der zweiten und der dritten Ecke 14,15.

Die lösbare Verbindung an der zweiten Ecke 14 des hinteren Rahmenteils 2 ist für Fahrbetrieb geschlossen und wird zum Zusammenklappen des Zweirads geöffnet. Sie teilt den hinteren Rahmenteil 2 in einen feststehenden Abschnitt 16 und einen schwenkbaren Abschnitt 17, wobei der schwenkbare Abschnitt 17 um das weitere Drehgelenk 12 im hinteren Rahmenteil 2 um eine weitere Querachse des Zweirads verschwenkt werden kann. Dabei verbleibt das Feder- und/oder Dämpferelement 7 zwischen dem feststehenden Abschnitt 16 und dem vorderen Rahmenteil 1.

Die lösbare Verbindung an der zweiten Ecke 14 kann zum Beispiel durch einen im Zweiradbau bekannten, allgemein verwendeten Schnellspannverschluß verwirklicht sein. Wird dieser von Hand gelöst, ist es möglich, wie in Figur 2 gezeigt, den Abschnitt 17 des hinteren Rahmenteils 2 um das weitere Drehgelenk 12 zu verschwenken, bis das Hinterrad 5 an die Vorderradaufhängung anstößt. Das Vorderrad 4 aus Fig. 1 ist hier aus der Vorderradaufhängung entfernt. Dazu ist das Vorderrad 4 mit einer Vorderradachse mittels eines nicht gezeichneten weiteren Schnellspannverschlusses in der Vorderradgabel 8 befestigt. Durch Lösen des weiteren Schnellspannverschlusses von Hand, kann das Vorderrad 4 ohne Verwendung von Werkzeug schnell und einfach aus der Vorderradgabel 8 entfernt werden.

Um die freie Schwenkbarkeit des Abschnitts 17 des hinteren Rahmenteils 2 zu gewährleisten, sind nicht gezeichnete Bowdenzüge, z. B. für die Bremse oder die Gangschaltung, bzw. elektrische Leitungen, z. B. für die Lichtanlage, die zum schwenkbaren Abschnitt 17 des hinteren Rahmenteils 2 führen, am Rahmen wenigstens in der Nähe des weiteren Drehgelenks 12 entlang geführt.

## Patentansprüche

1. Klappbares Zweirad, insbesondere Fahrrad, mit
einem Rahmen, der einen vorderen Rahmenteil (1) und einen damit verbundenen hinteren Rahmenteil (2) mit einem Hinterrad (5) aufweist,
wobei
eine Verbindung zwischen dem vorderen Rahmenteil (1) und dem hinteren Rahmenteil (2) durch ein Drehgelenk (6) und eine federnde und/oder dämpfende Abstützeinrichtung (7) gebildet ist, wobei das Drehgelenk (6) beim Ein-/Ausfedem der Abstützeinrichtung (7) eine Schwenkbewegung des hinteren Rahmenteils (2) um eine Querachse des Zweirads ermöglicht, wobei
eine lösbare Verbindung vorgesehen ist, die im Fahrbetrieb geschlossen ist und zum Zusammenklappen des Zweirads geöffnet wird,
**dadurch gekennzeichnet, dass**
der hintere Rahmenteil (2) einen vorderen Teilabschnitt (16) und einen hinteren Teilabschnitt (17) aufweist, wobei der vordere Teilabschnitt (16) über das Drehgelenk (6) mit dem vorderen Rahmenteil (1) verbunden ist und ein Ende (14) des hinteren Teilabschnitts (17) über die lösbare Verbindung mit dem vorderen Teilabschnitt (16) verbunden ist und
ein anderes Ende des hinteren Teilabschnitts (17) über ein weiteres Drehgelenk (12) mit dem vorderen Teilabschnitt (16) verbunden ist, wobei bei gelöster Verbindung eine Schwenkbewegung des hinteren Teilabschnitts (17) des hinteren Rahmenteils (2) um eine weitere Querachse des Zweirads, welche der Schwenkachse des weiteren Drehgelenks (12) entspricht, ermöglicht wird, während die Abstützeinrichtung (7) zwischen dem vorderen Teilabschnitt (16) und dem vorderen Rahmenteil (1) verbleibt.

2. Klappbares Zweirad nach Anspruch 1, **dadurch gekennzeichnet, daß** sich das Drehgelenk (6) der Verbindung zwischen vorderem (1) und hinterem Rahmenteil (2) auf einer Horizontalebene befindet, die oberhalb einer Lagerstelte (11) für ein Tretlager liegt und sich das weitere Drehgelenk (12) im hinteren Rahmenteil (2) auf einer Horizontalebene befindet, die unterhalb der Lagerstelle (11) für das Tretlager liegt.

3. Klappbares Zweirad nach Anspruch 1 oder 2, **dadurch gekennzeichnet, daß** der hintere Rahmenteil (2), bei dem für Fahrbetrieb aufgebauten Zweirad, im wesentlichen die Form eines Dreiecks besitzt, an dessen erster Ecke (13) das Hinterrad (5) angebracht ist, an dessen zweiter Ecke (14) die lösbare Verbindung liegt und die Abstützeinrichtung (7) angebracht ist und an dessen dritter Ecke (15) sich das weitere Drehgelenk (12) befindet.

4. Klappbares Zweirad nach einem der Ansprüche 1 bis 3, **dadurch gekennzeichnet, daß** sich das Drehgelenk (6) der Verbindung zwischen vorderem (1) und hinterem Rahmenteil (2), in vertikaler Richtung gesehen, zwischen der zweiten (14) und der dritten Ecke (15) befindet.

5. Klappbares Zweirad nach einem der Ansprüche 1 bis 4, **dadurch gekennzeichnet, daß** am vorderen Rahmenteil (1) ein Vorderrad (4) durch eine Vorderradaufhängung federnd abgestützt wird, indem ein Längslenker (9) am vorderen Rahmenteil (1) um eine weitere Querachse des Zweirads schwenkbar angebracht ist, der eine federnde Abstützung der Vorderradaufhängung bildet, während durch eine Verbindung über mindestens ein Kugelgelenk (10) zwischen dem vorderen Rahmenteil (1) und der Vorderradaufhängung eine weitere Abstützung der Vorderradaufhängung am vorderen Rahmenteil (1) gebildet wird.

6. Klappbares Zweirad nach einem der Ansprüche 1 bis 5, **dadurch gekennzeichnet, daß** das Vorderrad (4) mit der Vorderradaufhängung und/oder das Hinterrad (5) mit dem hinteren Rahmenteil (2) und/oder der vordere Teilabschnitt (16) mit dem schwenkbaren hinteren Teilabschnitt (17) des hinteren Rahmenteils (2) durch ohne Werkzeug lösbare Verbindungen verbunden sind.

7. Klappbares Zweirad nach Anspruch 6, **dadurch gekennzeichnet, daß** die ohne Werkzeug lösbaren Verbindungen durch Schnellspannverschlüsse gebildet werden.

## Claims

1. A collapsible two-wheel vehicle, especially a bicycle, with a frame comprising a front part (1), a back part (2) connected thereto and a rear wheel (5), wherein
a connection between the front part (1) and the rear part (2) is in the form of a swivel joint (6) and a resilient and/or shock-absorbing bracing device (7), and when the bracing device (7) is deflected or rebounds, the swivel joint (6) enables the rear part (2) to pivot around a transverse axis of the vehicle, wherein
a releasable connection is provided and is closed during motion and opened in order to collapse the vehicle,
**characterised in that**
the rear frame part (2) has a front portion (16) and a rear portion (17), wherein the front portion (16) is connected by the swivel joint (6) to the front part (1) and one end (14) of the rear portion (17) is connected via the releasable connection to the front portion (16), and
another end of the rear portion (17) is connected via an additional swivel joint (12) to the front portion (16), and when the connection is released the rear portion (17) of the rear part (2) can pivot around another transverse axis of the vehicle corresponding to the axis of rotation of the additional swivel joint (12), whereas the bracing device (7) remains between the front portion (16) and the front part (1).

2. A collapsible vehicle according to claim 1, **characterised in that** the swivel joint (6) of the connection between the front part (1) and the rear part (2) is on a horizontal plane situated above a bearing (11) for the pedal and the additional swivel joint (12) in the rear frame part (2) is disposed on a horizontal plane underneath the bearing (11) for the pedal.

3. A collapsible vehicle according to claim 1 or 2, **characterised in that** when the vehicle is assembled for running, the rear frame part (2) is substantially in the shape of a triangle, the rear wheel (5) being fastened to one apex (13), the releasable connection being disposed and the bracing device (7) being mounted on a second apex (14) and the additional swivel guide (12) being on the third apex (15).

4. A collapsible vehicle according to any of claims 1 to 3, **characterised in that** the swivel joint (6) of the connection between the front part (1) and the rear part (2), considered in the vertical direction, is between the second apex (14) and the third apex (15).

5. A collapsible vehicle according to any of claims 1 to 4, **characterised in that** a front wheel (4) is resiliently supported by a suspension means on the front frame part (1), **in that** a longitudinal member (9) on the front part (1) is mounted for pivoting around an additional transverse axis of the vehicle and resiliently supports the front wheel suspension, whereas a connection via at least one ball joint (10) between the front part (1) and the front wheel suspension additionally supports the front wheel suspension on the front frame part (1).

6. A collapsible vehicle according to any of claims 1 to 5, **characterised in that** the front wheel (4) and suspension and/or the rear wheel (5) and the rear frame part (2) and/or the front portion (16) is/are connected to the pivotable rear portion (17) of the rear frame part (2) by connections releasable without a tool.

7. A collapsible vehicle according to claim 6, **characterised in that** the connections releasable without a tool are quick-acting toggle-type fasteners.

## Revendications

1. Véhicule à deux roues, en particulier bicyclette, pliant, comprenant
un cadre qui présente une partie avant de cadre (1) et une partie arrière de cadre (2) qui y est reliée et possède une roue arrière (5),
dans lequel une liaison entre la partie avant de cadre (1) et la partie arrière de cadre (2) est constituée par une articulation de rotation (6) et un dispositif d'appui élastique et/ou amortisseur (7), l'articulation de rotation (6) permettant, lors du mouvement de compression et d'extension élastique du dispositif d'appui (7), un mouvement de pivotement de la partie arrière de cadre (2) autour d'un axe transversal du véhicule à deux roues, cependant qu'il est prévu une liaison démontable qui est verrouillée pendant le fonctionnement et qu'on déverrouille pour le repliage du véhicule à deux roues,
**caractérisé en ce que**
la partie arrière de cadre (2) présente un segment partiel avant (16) et un segment partiel arrière (17), le segment partiel avant (16) étant relié à la partie avant de cadre (1) au moyen de l'articulation de rotation (6) et une extrémité (14) du segment partiel arrière (17) étant reliée au segment partiel avant (16) par la liaison démontable, et
une autre extrémité du segment partiel arrière (17) étant reliée au segment partiel avant (16) par une autre articulation de rotation (12), cependant que, lorsque la liaison est déverrouillée, un mouvement de pivotement du segment partiel arrière (17) de la partie arrière de cadre (2) autour d'un autre axe transversal du véhicule à deux roues qui correspond à l'axe de pivotement de l'autre articulation de rotation (12) est alors rendu possible, tandis que le dispositif d'appui (7) entre le segment partiel avant (16) et la partie avant de cadre (1) subsiste.

2. Véhicule à deux roues pliant selon la revendication 1,
**caractérisé en ce que**
l'articulation de rotation (6) de la liaison entre la partie avant de cadre (1) et la partie arrière de cadre (2) se trouve sur un plan horizontal qui est placé au-dessus d'une zone de palier (11) prévue pour un palier de pédalier et l'autre articulation de rotation (12) se trouve dans la partie arrière de cadre (2) sur un plan horizontal qui est placé au-dessous de la zone de palier (11) prévue pour le palier de pédalier.

3. Véhicule à deux roues pliant selon la revendication 1 ou 2,
**caractérisé en ce que**
la partie arrière de cadre (2), dans le véhicule à deux roues monté pour le fonctionnement, possède sensiblement la forme d'un triangle au premier sommet (13) duquel la roue arrière (5) est montée, au deuxième sommet (14) duquel se trouve la liaison séparable et est agencé le dispositif d'appui (7) et au troisième sommet (15) duquel se trouve l'autre articulation de rotation (12).

4. Véhicule à deux roues pliant selon une des revendications 1 à 3,
**caractérisé en ce que**
l'articulation de rotation (6) de la liaison entre la partie avant de cadre (1) et la partie arrière de cadre (2) se trouve entre le deuxième sommet (14) et le troisième sommet (15), vu dans la direction verticale.

5. Véhicule à deux roues pliant selon une des revendications 1 à 4,
**caractérisé en ce qu'**
une roue avant (4) prend appui élastiquement sur la partie avant de cadre (1) par une suspension de roue avant, par le fait qu'un bras longitudinal (9) est monté sur la partie avant de cadre (1) de façon à pouvoir pivoter autour d'un autre axe transversal du véhicule à deux roues, bras qui forme un appui élastique de la suspension de roue avant, cependant qu'un autre appui de la suspension de roue avant sur la partie avant de cadre (1) est formé par une liaison par l'intermédiaire d'au moins une articulation à rotule (10) entre la partie avant de cadre (1) et la suspension de roue avant.

6. Véhicule à deux roues pliant selon une des revendications 1 à 5,
**caractérisé en ce que**
la roue avant (4) peut être reliée à la suspension de roue avant et/ou la roue arrière (5) à la partie arrière de cadre (2) et/ou le segment partiel avant (16) au segment partiel arrière pivotant (17) de la partie arrière de cadre (2) par des liaisons pouvant être désassemblées sans outil.

7. Véhicule à deux roues pliant selon la revendication 6,
**caractérisé en ce que**
les liaisons désassemblables sans outil sont constituées par des fixations à serrage rapide.
